# EUROPEAN PATENT APPLICATION

(11) **EP 3 825 229 A1**
(43) Date of publication of application: **26.05.2021**
(21) Application number: 19380031.5
(22) Date of filing: 19.11.2019
(51) Int. Cl.: B64C 27/08, B64C 27/20, B64C 39/00, B64D 27/24, B64D 31/06, B64D 31/14, B64D 35/00, B64D 31/10, B64D 35/04

(54) **PROPULSION SYSTEM FOR AN ELECTRICALLY DRIVEN AIRCRAFT, AIRCRAFT COMPRISING A PROPULSION SYSTEM AND METHOD OF SELECTIVELY ADAPTING AN ENERGY SUPPLY WITHIN A PROPULSION SYSTEM OF AN ELECTRICALLY DRIVEN AIRCRAFT**

(71) Applicant: AIRBUS HELICOPTERS DEUTSCHLAND GmbH, 86609 Donauwörth (DE); Airbus Defence and Space SA, 28906 Getafe Madrid (ES)
(72) Inventor: The designation of the inventor has not yet been filed
(74) Representative: LKGLOBAL Lorenz & Kopf PartG mbB Patentanwälte

(57) **Abstract**

The invention relates to a propulsion system (10) for an electrically driven aircraft (100). The propulsion system comprises a plurality of drive units (30a, 30b, 30c) and an energy management subsystem (11) for adapting an energy supply to the plurality of drive units (30a, 30b, 30c). The energy management subsystem (11) comprises a control unit (22), an energy storage unit (24) and a voltage converter (26). The voltage converter (26) is configured to adapt an output voltage of the energy storage unit (24) to a voltage level of a selected one of the plurality of drive units (30a, 30b, 30c) and the control unit (22) is configured to connect the energy storage unit (24) to the selected one of the plurality of drive units (30a, 30b, 30c), such that energy is supplied by the energy storage unit (24) to the selected one of the plurality of drive units (30a, 30b, 30c) or such that energy is withdrawn from the selected one of the plurality of drive units (30a, 30b, 30c). The invention also relates to an aircraft (100) comprising the propulsion system (10) and to a method of selectively adapting an energy supply within a propulsion system (10) of an electrically driven aircraft (100).

## Description

### Field of the invention

The invention relates to an electric propulsion system for multicopter aircraft configurations. In particular, the invention relates to a propulsion system for an electrically driven aircraft, an aircraft comprising the propulsion system and a method of selectively adapting an energy supply within a propulsion system of an electrically driven aircraft.

### Technical Background

Electric propulsion systems for aircraft usually comprise energy storage systems in the form of one or more batteries, multiple thrust units including power electronics and an electric motor which drives a rotor or propeller shaft. Furthermore, an energy distribution system is provided for such propulsion systems. In these systems, usually a single battery is powering one or more thrust units. An electric multicopter rotorcraft typically integrates several energy channels to enable sufficient overall thrust, wherein the channels typically operate in an isolated manner to avoid failure propagation to other thrust units. Generally, such channels are designed to safely land following failure in one propulsion unit or battery, but the loss of multiple propulsion units is critical. A reconfiguration of the network of channels in case of failures in such a way that the loss of one complete channel can be accommodated by oversizing the relevant components leads to a large weight penalty since the degree of oversizing can be significant. Moreover, the energy storage for such aircraft are requested to provide significant electric power to each thrust unit (typically above 100 kW) which requires delivering the power at relatively high voltage. In addition, the voltage on the batteries is not constant and decreases along the mission due to discharge.

In multicopter aircraft, the different thrust units are used not only to lift or push the aircraft, but also to control its attitude, so that the units must operate at variable and differing power settings along the mission for example depending on the wind and center of gravity location, This may cause that not all the energy in the storage system will be used and the mission is limited by the channel hosting the most used battery, while unused energy remains in the other batteries. In case of failure of a component in one channel, the overall network and energy supply must be reconfigured resulting in high transient currents during the network reconfiguration,

EP 2 720 945 A1 describes a drive device for an aircraft, comprising at least one battery for storing electric energy, an electric motor for driving a propeller, a conduit for transferring the electric energy from the battery to the electric motor, and a first control means for controlling the electric motor.

US 2016/137305 A1 describes an electric propulsion assembly for an aircraft including a nacelle having a nacelle cowl which defines an inner space for arranging an electric propulsion unit, which includes a blower, of the aircraft. An electric motor assembly is placed in the inner space and connected to the propulsion unit to supply power to the propulsion unit.

### Summary of the invention

It may be seen as an object of the invention to provide an improved propulsion system for electrically driven aircraft.

A propulsion system and a method according to the features of the independent claims is provided. Further developments of the invention can be derived from the dependent claims and from the following description.

According to an aspect of the invention, a propulsion system for an electrically driven aircraft is provided. The propulsion system comprises a plurality of drive units and an energy management subsystem for adapting an energy supply to the plurality of drive units. The energy management subsystem comprises a control unit, an energy storage unit and a voltage converter. The energy storage unit of the energy management subsystem may also be referred to as central energy storage unit. The voltage converter is configured to adapt an output voltage of the central energy storage unit to a voltage level of a selected one of the plurality of drive units and the control unit is configured to connect the central energy storage unit to the selected one of the plurality of drive units, such that energy is supplied by the central energy storage unit to the selected one of the plurality of drive units or such that energy is withdrawn from the selected one of the plurality of drive units. Thus, the control unit actively controls a supply of energy from the central energy storage unit to a selected drive unit or a withdraw of energy from the selected drive unit.

The term "energy" may be understood as an electric energy. In particular, the control unit is configured to connect the central energy storage unit to the selected one of the plurality of drive units, such that electric energy is supplied by the central energy storage unit to the selected one of the plurality of drive units or such that electric energy is withdrawn from the selected one of the plurality of drive units.

The term "plurality of drive units" may be understood such that the propulsion system comprises at least two drive units. It is, however, possible that the propulsion system comprises exactly two, exactly three, exactly four, exactly five, exactly six, exactly seven, etc. drive units, depending on the aircraft configuration. An example having three drive units will be described in the description of the figures below.

The inventive propulsion system provides an overall energy management by adapting the voltage level of a central energy supply to respective voltage levels of energy channels of the different drive units. In this manner, it is possible to reduce or even erase the occurrence of transient currents during a required reconfiguration of the energy supply within the propulsion system. In other words, the invention provides an energy management subsystem, also referred to as dedicated energy management system (EMS), for the electric propulsion system (EPS). This system may ensure that the various energy channels in a multicopter aircraft are always at identical voltage levels, thus avoiding the weight penalty for having to size for high transient currents in the case of reconfiguration and enabling the maximum use of the energy, thereby optimizing the vehicle endurance and mission capabilities. This propulsion system may be integrated in multicopter configurations which realize the vertical lift function and the horizontal thrust function in using separate thrust units, wherein the imbalance between the various energy channels may be particularly severe. Furthermore, the system is designed fail-safe, in that no common mode is created by its addition to the overall aircraft propulsion system. As a result, the oversizing penalty to pay for either of the strategies to cope with failures in an energy channel of the propulsion system is essentially removed, thereby significantly contributing to the viability of electric propulsion systems for aircraft, in particular multicopter aircraft.

The propulsion system can be suitably integrated in a manned or unmanned aircraft. The aircraft can be a multicopter aircraft having a plurality of rotors driven by the respective drive units of the propulsion system. Electrically driven aircraft means that the aircraft can be completely or partially driven by electric drive units. If the aircraft is partially driven by electric drive units, then the aircraft may include a hybrid-electric propulsion system. If the aircraft is completely driven by electric drive units, then the aircraft may include an all-electric propulsion system.

The plurality of drive units may comprise different or separate drive units. Each of the drive units may comprise a thrust unit, an energy storage unit and an energy channel, also referred to as channel, which connects the thrust unit and the energy storage unit of the respective drive unit. The thrust unit may comprise a rotor or propeller delivering the required propulsion power or propulsion force to the aircraft in order to lift or maneuver the aircraft.

The energy management subsystem may be arranged separately from the plurality of drive units or the plurality of drive units may be part of the energy management subsystem. The energy management subsystem itself comprises an energy storage unit, also referred to as central energy storage unit, since the energy storage unit of the energy management subsystem is to be distinguished from the energy storage units of the drive units. It may be possible that the central energy storage unit is used as an alternative supply in case of a failure in the corresponding energy source of any of the drive units, thereby ensuring the thrust function in such a case. In particular, the central energy storage unit may be used for energy supply to a drive unit while no energy is supplied by the energy storage unit of said drive unit, for example in case of a failure of the energy storage unit of the respective drive unit.

The voltage converter is configured to adapt an output voltage, i.e. a voltage that is currently set at the central energy storage unit, to a voltage level of the selected one of the plurality of drive units. In other words, the voltage level is either increased or decreased to a voltage level currently detected or set at the drive unit, for example a voltage level of the energy channel of the selected drive unit. In an example, the voltage converter is configured to adapt the voltage level set at the energy storage unit of the energy management subsystem to the voltage level set at the selected drive unit. If the voltage level at the output of the energy storage unit has been adapted, the control unit can connect the central energy storage unit to the selected one of the plurality of drive units, thereby avoiding the occurrence of transient currents due to different voltage levels set at the drive unit and set at the central energy storage unit of the energy management subsystem. The voltage converter may be an electric power converter that changes the voltage of an electric power source, e.g. the voltage of the central energy storage unit of the energy management subsystem. The voltage converter may be a DC - to - DC converter (direct current-to-direct current converter).

The energy storage unit of the energy management subsystem, i.e. the central energy storage unit, may be a battery, for example a rechargeable battery. In an example, the central energy storage unit may be a fuel cell.

According to an embodiment of the invention, the control unit is configured to connect the central energy storage unit to the selected one of the plurality of drive units after the voltage converter has adapted the output voltage level of the central energy storage unit to the voltage level of the selected one of the plurality of drive units.

This means that the control unit is configured to actively connect the central energy storage unit to the selected drive unit, for example using an electric switch for selectively providing an electric contact between the central energy storage unit and the selected drive unit.

The contact, i.e. the electric connection between the central energy storage unit to the selected drive unit is established after the output voltage level has been adapted. This is important in order to avoid transient currents within the electric network of the propulsion system due to different voltage levels.

According to a further embodiment of the invention, the voltage converter is configured to adapt the output voltage of the central energy storage unit by increasing or decreasing the output voltage of the central energy storage unit.

It is possible that the voltage levels currently set at the different drive units of the plurality of drive units are distinct for a current operating condition of the respective drive unit. For example, a first drive unit provides a vertical lift force on the aircraft while a second drive unit provides a horizontal propulsion force on the aircraft, wherein both operating conditions require different voltage levels and/or energy supply.

In order to be able to adapt the output voltage level to the current voltage level of the respective drive units, the control unit is configured to determine the amount of energy and/or the amount of a change in voltage level required for the respective drive unit to be connected to the central energy storage unit. In consequence, the voltage converter is configured to adapt the output voltage level at the central energy storage unit to the voltage level of the respective drive unit to be connected to the central energy storage unit. This may be done by increasing the currently set output voltage level of the central energy storage unit or by decreasing the currently set output voltage level of the central energy storage unit.

According to another embodiment of the invention, the control unit is configured to connect only one of the plurality of drive units to the central energy storage unit and, simultaneously, to disconnect the remaining ones of the plurality of drive units from the central energy storage unit.

This means that only one drive unit may be connected to the central energy storage unit and that the control unit actively prevents a configuration where two drive units are simultaneously connected to the central energy storage unit at the same time to avoid common failure affecting multiple drive units, e.g. energy channels. An active connection of one selected drive unit to the central energy storage unit as well as an active disconnection of the remaining drive units from the central energy storage unit can be ensured by the control unit.

According to an embodiment of the invention, the energy management subsystem further comprises a distribution unit, wherein the distribution unit electrically connects the central energy storage unit to the selected one of the plurality of drive units, such that energy is supplied by the central energy storage unit to the selected one of the plurality of drive units or such that energy is withdrawn from the selected one of the plurality of drive units.

The distribution unit may comprise an electric switch or a plurality of electric switches to establish an electric contact between the central energy storage unit and the selected drive unit. The control unit is configured to control the switches of the distribution unit and, particularly, controls the switches such that only one electric contact between the central energy storage unit and the selected drive unit is closed, i.e. is in a connected state, while the contacts between the central energy storage unit and the remaining ones of the plurality of drive units are opened, i.e. are in a disconnected state.

According to an embodiment of the invention, the control unit is configured to receive information selected from the group comprising information about a voltage level of each of the plurality of drive units, information about an electric current in each of the plurality of drive units, information about an electric contact between the central energy storage unit and each of the plurality of drive units, and information about an operating condition of the propulsion system.

It is possible that the control unit uses this information as input values or input parameters in order to control the settings of the voltage converter and/or the distribution unit. The information of the voltage level of each of the plurality of drive units may indicate distinct voltage values currently set at the respective drive units. The information about an electric current in each of the plurality of drive units may indicate distinct electric current values currently present at the respective drive units. The information about an electric contact between the central energy storage unit and each of the plurality of drive units may indicate which one of the switches of the distribution unit is closed and which switches of the distribution unit are opened. The information about the operating condition of the propulsion system may indicate a current provided by the respective drive units, for example provided by the respective thrust units of the drive units. The information may include a value corresponding to a power of the thrust unit, a thrust force provided by the thrust unit, but also an indication about a non-nominal operating condition of at least one of the drive units

According to an embodiment of the invention, the control unit is configured to connect the central energy storage unit to the selected one of the plurality of drive units based on the received information.

The propulsion system can thus provide a real-time energy management for the different drive units, i.e. thrust units, of an electrically driven aircraft by using the received information detected or measured within the propulsion system. For example, a balance of the energy and voltage levels in the different drive units can be provided such that no transient currents occur during reconfiguration of the network. A reconfiguration of the network may include a change of the energy supply to one or more of the plurality of drive units in order to provide more or less thrust from the respective drive units.

According to an embodiment of the invention, the central energy storage unit is adapted to provide electric energy to an aircraft subsystem separate from the energy management subsystem and separate from the plurality of drive units.

Providing electric current to such a separate subsystem of the aircraft may be a further function of the central energy storage unit, i.e. the energy storage unit of the energy management subsystem. For example, the central energy storage unit may be used to provide electric energy for controlling aerodynamic control surfaces like high-lift systems, rudders or air brakes of the aircraft. Furthermore, energy from the central energy storage unit may be provided to cockpit systems or other electric equipment of the aircraft. The provision of electric energy to such a separate aircraft subsystem may be in addition to the provision of electric energy to the selected drive unit or instead of the provision of electric energy to the selected drive unit, for example, when no electric energy is provided from the central energy storage unit to a drive unit. The electric energy stored in the central energy storage unit of the energy management subsystem may thus contribute to the overall aircraft energy pool, thereby increasing aircraft performance.

According to an embodiment of the invention, each one of the plurality of drive units comprises an individual energy storage unit and an individual thrust unit connected to the individual energy storage unit via an individual energy channel.

One drive unit may thus have one thrust unit, one energy channel and one energy storage unit. A separate control of each of the drive units is possible based on the received information as explained above. Using this information, it is for example possible that the energy management subsystem (EMS) incorporates the function of balancing the energy and voltage levels of the individual drive units, i.e. of the individual energy channels of the drive units, during operation. The balancing of the energy channels in all operating modes ensures that no significant transient currents occur during reconfiguration of the network, allowing to optimize the sizing of the reconfiguration components to save weight and increase system reliability. The balancing of the energy channels is done in such a way that only one channel is connected to the energy management subsystem and thus to the central energy storage unit at the same time in order to eliminate the possibility of common mode failures.

The individual energy storage units of the respective drive units may be batteries, for example rechargeable batteries. In an example, the individual energy storage units may be fuel cells.

A further function of the energy management subsystem is to provide additional electric energy when needed to extend range and/or hovering time, for example by supplying more power to one of the drive units and less power to another one of the drive units. Furthermore, the energy management subsystem provides maximum exploitation of available electric energy in the propulsion system.

In contemporary architectures, the flight operation needs to be stopped whenever the one energy channel is running out of electric energy, whereas adjacent energy channels may have significant amounts of energy remaining. This applies to common architectures in which the vertical lift and propulsive thrust functions are allocated to dedicated energy channels. However, the inventive propulsion system, in particular the energy management subsystem provides an external energy supply that can be selectively connected to the energy channels and can be used to charge the energy storage units, i.e. the batteries, connected to the thrust unit without the need to include DC-to-DC converters in each of the energy channels. In other words, each energy channel can operate separately, but the energy or voltage level for the separate energy channels can be selectively adjusted using the central energy storage unit of the energy management subsystem. Since the provided voltage level is centrally adjusted by the voltage converter of the energy management subsystem before connecting the central energy storage unit to one of the energy channels, there is no need for each energy channel to have an own voltage converter.

According to an embodiment of the invention, the plurality of drive units comprises a first drive unit having a first individual energy channel which connects a first individual energy storage unit with a first individual thrust unit and the plurality of drive units comprises a second drive unit having a second individual energy channel which connects a second individual energy storage unit with a second individual thrust unit. The voltage converter is configured to adapt the output voltage of the central energy storage unit of the energy management subsystem to a voltage level of the first individual energy storage unit based on an information about a deviation from a nominal operating condition of the second drive unit.

A balancing of the energy supply and the voltage level in case of system failures or abnormal operating conditions is another advantage of the inventive propulsion system. In particular, it is possible that the first thrust unit can be provided with increased electric energy when a performance reduction or a failure of the second thrust unit has been detected. The first thrust unit can then provide and contribute more power to the overall propulsion system, thereby compensating the performance reduction or a failure of the second thrust unit. For example, if the aircraft propulsion system has two vertical thrust units which provide a lift force on the vehicle, the first thrust unit can contribute more power in case the second thrust unit experiences a performance reduction, wherein transient currents due to the higher voltage level set at the first thrust unit can be avoided by adapting the voltage level at the central energy storage unit before connecting it to the first drive unit. It is noted that this distribution of energy between the thrust units is not restricted to a case where there is a performance reduction or failure in one of the thrust units, but applies also to the normal balance of energy supply or change of energy supply between the different thrust units during operation of the propulsion system. The advantages are the same, namely reducing or even avoiding the occurrence of transient currents within the propulsion system due to a change of the voltage level between the different energy channels and thus due to an energy distribution between the energy channels of the propulsion system.

According to an embodiment of the invention, the control unit of the energy management subsystem is configured to connect the central energy storage unit of the energy management subsystem to the first individual energy channel, such that energy is supplied by the central energy storage unit of the energy management subsystem to the first individual thrust unit in parallel to energy supplied by the first individual energy storage unit to the first individual thrust unit.

In other words, two energy storage units may be connected at the same time to one and the same thrust unit in order to provide an increased energy supply to said thrust unit. However, before the central energy storage unit of the energy management subsystem is connected to the first thrust unit, the voltage level currently present at the central energy storage unit of the energy management subsystem is adjusted to be equal or almost equal to the voltage level present at the first energy channel, i.e. present at the first individual energy storage unit of the first drive unit.

According to an embodiment of the invention, the control unit of the energy management subsystem is configured to determine that the central energy storage unit of the energy management subsystem is disconnected from the second individual energy channel, such that only the first individual energy channel is connected to the central energy storage unit of the energy management subsystem when energy is supplied by the central energy storage unit of the energy management subsystem to the first individual thrust unit.

This ensures, that only one thrust unit is connected to the energy storage unit of the energy management subsystem, i.e. the central energy storage unit. This may be important since the voltage level set at the central energy storage unit is preferred to be adjusted to be equal or almost equal to the voltage level of the energy channel to which the central storage unit will be connected. Since the different energy channels of the drive units may have different voltage levels and it is only possible to adjust the voltage level of the central energy storage unit to one of these energy channels, it is necessary to ensure that only one energy channel is connected to the central energy storage unit while the other energy channels are disconnected from the central energy storage unit.

According to an embodiment of the invention, the information about the deviation from a nominal operating condition of the second drive unit comprises an information about a failure of the second drive unit or an information about a reduced performance of the second drive unit. For example, the reduced performance may include a power or thrust reduction of the second thrust unit.

According to another aspect of the invention, an aircraft comprises the above and below described propulsion system.

According to another aspect of the invention, a method of selectively adapting an energy supply within a propulsion system of an electrically driven aircraft is provided. In a step, a plurality of drive units and an energy management subsystem is provided, In another step, information about an operating condition of the plurality of drive units is received. In another step, one drive unit is selected out of the plurality of drive units based on the information about the operating condition of the plurality of drive units. In another step, the energy management subsystem adapts an output voltage of a central energy storage unit of the energy management subsystem to a voltage level of the selected drive unit. In another step, the central energy storage unit is connected to the selected drive unit, such that energy is supplied by the central energy storage unit to the selected drive unit or such that energy is withdrawn from the selected drive unit.

In an optional step, the energy storage unit is disconnected from the selected drive unit. It may be possible that all steps are repeated with the selection of the same or another drive unit.

### Brief description of the drawings

The present invention will hereinafter be described in conjunction with the following drawing figures, wherein like numerals denote like elements, and wherein:
- Fig. 1: illustrates a propulsion system according to an exemplary embodiment of the invention.
- Fig. 2: shows an aircraft comprising the propulsion system of Fig. 1 according to an exemplary embodiment of the invention.
- Fig. 3: shows a flow diagram for a method of selectively adapting an energy supply within a propulsion system of an electrically driven aircraft according to an exemplary embodiment of the invention.

### Detailed description of exemplary embodiments

The following detailed description is merely exemplary in nature and is not intended to limit the invention or the application and uses of the invention. Furthermore, there is no intention to be bound by any theory presented in the preceding background or the following detailed description. The representations and illustrations in the drawings are schematic and not to scale. Like numerals denote like elements. A greater understanding of the propulsion system described above may be obtained through a review of the illustrations accompanying this application together with a review of the detailed description that follows.

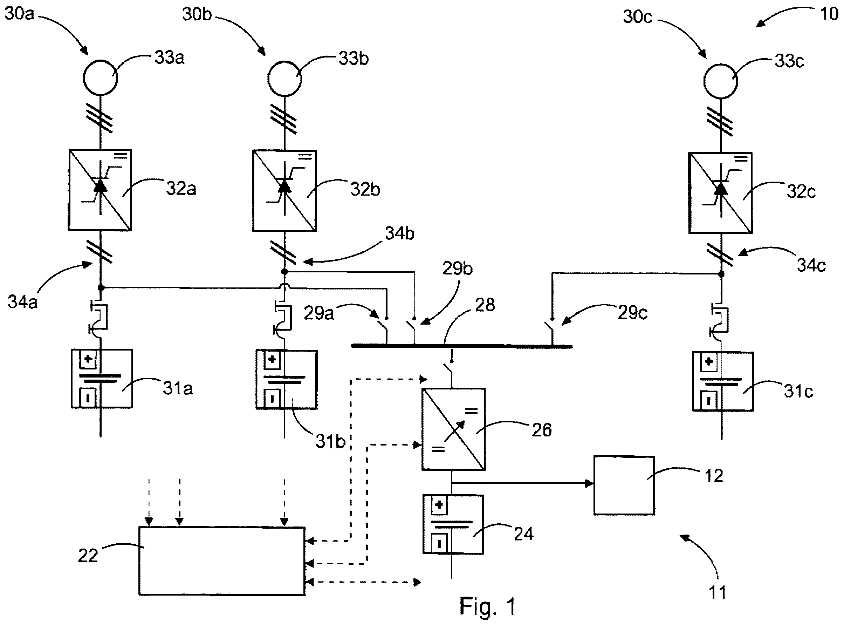

Fig. 1 shows a propulsion system 10 which can be used, for example, in electrically driven aircraft. In particular, the propulsion system 10 shown in Fig. 1 has three electric drive units 30a, 30b, 30c. However, it is noted, that more or less than three electric drive units 30a, 30b, 30c may be arranged at or integrated into the propulsion system 10 so that the functions and principles described with respect to the three electric drive units 30a, 30b, 30c shown also apply in cases where there are additional or less electric drive units. Each of the drive units 30a, 30b, 30c comprises an individual energy storage unit 31a, 31b, 31c unit and an individual thrust unit 33a, 33b, 33c connected to the individual energy storage unit 31a, 31b, 31c via an individual energy channel 34a, 34b, 34c. As can be derived from Fig. 1, the energy channels 34a, 34b, 34c are separate for each drive unit 30a, 30b, 30c. The thrust units 33a, 33b, 33c may comprise a motor, in particular an electric motor, having a rotor or propeller. Furthermore, each of the drive units 30a, 30b, 30c comprises a DC-to-AC converter (direct current - to - alternate current converter) 32a, 32b, 32c electrically coupled between the respective thrust units 33a, 33b, 33c and the respective energy storage units 31a, 31b, 31c such that the energy storage units 31a, 31b, 31c are electrically coupled to the respective thrust units 33a, 33b, 33c via the respective energy channels 34a, 34b, 34c and via the respective DC-to-AC converters 32a, 32b, 32c.

The propulsion system further comprises an energy management subsystem 11 for adapting an energy supply to the drive units 30a, 30b, 30c. The energy management subsystem 11 itself comprises a control unit 22, an energy storage unit 24, also referred to as central energy storage unit 24, a voltage converter 26 as well as a distribution unit 28. The distribution unit 28 includes switches 29a, 29b, 29c for closing and opening an electric connection between the energy management subsystem 11 and the drive units30a, 30b, 30c.

The central energy storage unit 24 is electrically connected to the voltage converter 26, which may be a DC-to-DC converter. The control unit 22 is communicatively coupled to the voltage converter 26 and also to the drive units 30a, 30b, 30c. The control unit 22 may receive information from the drive units 30a, 30b, 30c and may control the voltage converter 26 and the distribution unit 28 based on the received information. Furthermore, the control unit 22 may receive information from another aircraft system not shown in Fig. 1, for example control instructions from cockpit of the aircraft, and use this information to control the voltage converter 26 and the distribution unit 28. The voltage converter 26 is particularly configured to adapt an output voltage of the central energy storage unit 24 to a voltage level of a selected one of the plurality of drive units 30a, 30b, 30c, for example drive unit 30c. If drive unit 30c is selected, the voltage level currently present or set at the central storage unit 24 is adjusted by the voltage converter 26 such that the voltage level set by the voltage converter 26 is equal or almost equal to the voltage level currently present at energy channel 34c. If the voltage level has been adapted, the control unit closes switch 29c, thereby establishing an electric conncction between the central energy storage unit 24 and drive unit 30c, and simultaneously ensures that the switches 29a and 29b are opened, i.e. the central storage unit 24 is electrically disconnected from drive units 30a and 30b.

In other words, the control unit 22 is configured to connect the central energy storage unit 24 to the selected one of the plurality of drive units 30a, 30b, 30c, such that energy is supplied by the central energy storage unit 24 to the selected one of the plurality of drive units 30a, 30b, 30c or such that energy is withdrawn from the selected one of the plurality of drive units 30a, 30b, 30c. At the same time, it is possible to provide at least a part of the electric energy stored in the central energy storage unit 24 to a separate aircraft system 12 of the aircraft.

Summarizing the above in other words, the propulsion system 10 may comprise different energy channels 34a, 34b, 34c, which drive propellers or rotors 33a, 33b, 33c using high-voltage batteries 31a, 31b, 31c as electric power sources. It is possible that one channel, for example channel 34a, may power one or more propellers or rotors. The various channels 34a, 34b, 34c may be arranged in such a way that the function for vertical lift in low-speed flight and hovering flight and the function for thrust in horizontal direction as propulsive force are separated. In particular, the individual channels 34a, 34b, 34c may be isolated from each other in nominal mode. In failure cases, the network may be reconfigured by putting some or all channels 34a, 34b, 34c in parallel in order to accommodate for the failure of individual system components.

The energy management subsystem (EMS) 11 of the propulsion system 10 comprises an EMS battery 24 which serves as central electric energy source for the EMS 11. It provides the energy needed for the balancing of the individual channels 34a, 34b, 34c. Secondarily, it serves as an additional energy source for the aircraft in that it may be configured to deliver electric energy to a separate aircraft system 12. A variable DC-to-DC converter of the EMS 11 adapts the output voltage of the EMS battery 24 to the current voltage level of a selected one of the channels 34a, 34b, 34c which is then connected to the EMS 11 by the respective switch 29a, 29b, 29c. This ensures that no significant transient currents occur during operation of the EMS 11. In addition, once the EMS battery 24 is connected in parallel to one of the other batteries 31a, 31b, 31c, the electric current delivered by the EMS is controlled to be kept within adequate limits for the EMS battery 24. The distribution unit 28, also referred to as EMS contactor bank, electrically connects and disconnects the EMS 11 to the individual channels 34a, 34b, 34c as needed. The contact of the EMS 11 to one thrust unit, for example thrust unit 33c is only done while the EMS 11 is ensured insulated, i.e. disconnected, from other channels 34a, 34b, as well as after adaption of the voltage level of EMS battery 24 to the voltage level of energy channel 34c. The EMS controller 22 integrates the EMS control and monitoring functions. It monitors the state of the drive units 30a, 30b, 30c and thus also the thrust units 33a, 33b, 33c and/or the channels 34a, 34b, 34c and coordinates the activity of the EMS 11 according to a defined or predetermined EMS logic. For example, the controller 22 commands the connection and disconnection of the EMS 11 to the individual channels 34a, 34b, 34c as needed. Furthermore, the controller 11 provides the desired output voltage to the variable
DC-to-DC converter and may also incorporate the necessary reconfiguration logics in case of failures to make optimum use of the batteries 31a, 31b, 31c connected to the thrust units 33a, 33b, 33c.

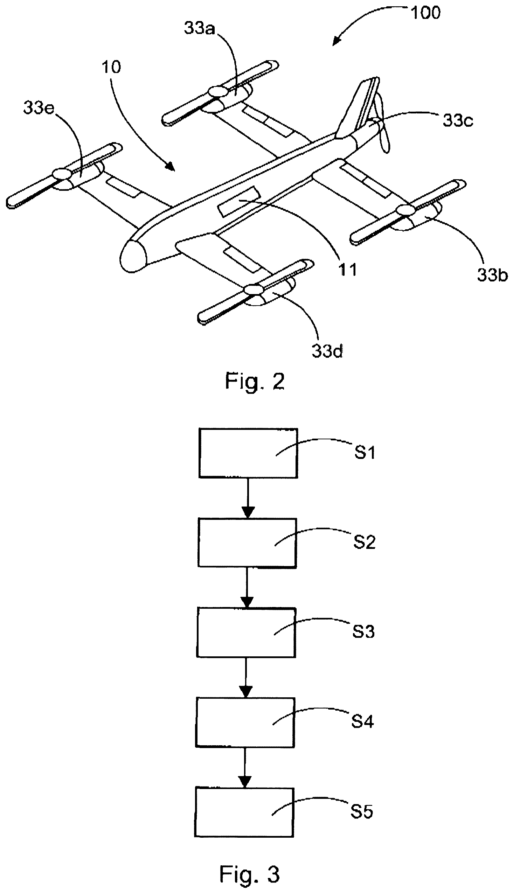

Fig. 2 shows an aircraft 100 comprising the propulsion system 10 described with respect to Fig. 1. The aircraft 100 has five drive units and therefore five thrust units 33a, 33b, 33c, 33d, 33c, wherein the energy balance between the different thrust units 33a, 33b, 33c, 33d, 33c is controlled by the energy management subsystem 11.

Fig. 3 shows a flow diagram for a method of selectively adapting an energy supply within a propulsion system 10 of an electrically driven aircraft 100. In a step S1 of the method, a plurality of drive units 30a, 30b, 30c and an energy management subsystem 11 is provided. In another step S2, information about an operating condition of the plurality of drive units 30a, 30b, 30c is received. In another step S3, one drive unit of the plurality of drive units 30a, 30b, 30c is selected based on the information about the operating condition of the plurality of drive units 30a, 30b, 30c, In another step S4, the energy management subsystem 11 adapts an output voltage of an energy storage unit 24 to a voltage level of the selected drive unit. In another step S5, the energy storage unit 24 is connected to the selected drive unit, such that energy is supplied by the energy storage unit 24 to the selected drive unit or such that energy is withdrawn from the sclcctcd drive unit,

These method steps can be carried out in the sequential order as described above. However, it is possible that these steps can be carried out in an arbitrary sequence. It is possible that step S4 is carried out before step S5.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

## Claims

1. Propulsion system (10) for an electrically driven aircraft (100), comprising:
a plurality of drive units (30a, 30b, 30c);
an energy management subsystem (11) for adapting an energy supply to the plurality of drive units (30a, 30b, 30c), the energy management subsystem (11) comprising:
a control unit (22);
an energy storage unit (24);
a voltage converter (26);
wherein the voltage converter (26) is configured to adapt an output voltage of the energy storage unit (24) to a voltage level of a selected one of the plurality of drive units (30a, 30b, 30c);
wherein the control unit (22) is configured to connect the energy storage unit (24) to the selected one of the plurality of drive units (30a, 30b, 30c), such that energy is supplied by the energy storage unit (24) to the selected one of the plurality of drive units (30a, 30b, 30c) or such that energy is withdrawn from the selected one of the plurality of drive units (30a, 30b, 30c).

2. Propulsion system (10) according to claim 1,
wherein the control unit (22) is configured to connect the energy storage unit (24) to the selected one of the plurality of drive units (30a, 30b, 30c) after the voltage converter (26) has adapted the output voltage of the energy storage unit (24) to the voltage level of the selected one of the plurality of drive units (30a, 30b, 30c).

3. Propulsion system (10) according to any one of the preceding claims,
wherein the voltage converter (26) is configured to adapt the output voltage of the energy storage unit (24) by increasing or decreasing the output voltage of the energy storage unit (24).

4. Propulsion system (10) according to any one of the preceding claims,
wherein the control unit (22) is configured to connect only one of the plurality of drive units (30a, 30b, 30c) to the energy storage unit and, simultaneously, to disconnect the remaining ones of the plurality of drive units (30a, 30b, 30c) from the energy storage unit (24),

5. Propulsion system (10) according to any one of the preceding claims,
wherein the energy management subsystem (11) further comprises a distribution unit (28);
wherein the distribution unit (28) electrically connects the energy storage unit (24) to the selected one of the plurality of drive units (30a, 30b, 30c), such that energy is supplied by the energy storage unit (24) to the selected one of the plurality of drive units (30a, 30b, 30c) or such that energy is withdrawn from the selected one of the plurality of drive units (30a, 30b, 30c).

6. Propulsion system (10) according to any one of the preceding claims,
wherein the control unit (22) is configured to receive information selected from the group comprising information about a voltage level of each of the plurality of drive units (30a, 30b, 30c), information about an electric current in each of the plurality of drive units (30a, 30b, 30c), information about an electric contact between the energy storage unit (24) and each of the plurality of drive units (30a, 30b, 30c), and information about an operating condition of the propulsion system (10).

7. Propulsion system (10) according to claim 6,
wherein the control unit (22) is configured to connect the energy storage unit (24) to the selected one of the plurality of drive units (30a, 30b, 30c) based on the received information.

8. Propulsion system (10) according to any one of the preceding claims,
wherein the energy storage unit (24) is adapted to provide electric energy to an aircraft subsystem (12) separate from the energy management subsystem (11) and separate from the plurality of drive units (30a, 30b, 30c).

9. Propulsion system (10) according to any one of the preceding claims,
wherein each one of the plurality of drive units (30a, 30b, 30c) comprises an individual energy storage unit (31a, 31b, 31c) and an individual thrust unit (33a, 33b, 33c) connected to the individual energy storage unit (31a, 31b, 31c) via an individual energy channel (34a, 34b, 34c).

10. Propulsion system (10) according to any one of the preceding claims,
wherein the plurality of drive units (30a, 30b, 30c) comprises a first drive unit (30a) having a first individual energy channel (34a) which connects a first individual energy storage unit (31a) with a first individual thrust unit (33a),
wherein the plurality of drive units (30a, 30b, 30c) comprises a second drive unit (30b) having a second individual energy channel (34b) which connects a second individual energy storage unit (31b) with a second individual thrust unit (33b),
wherein the voltage converter is configured to adapt the output voltage of the energy storage unit (24) of the energy management subsystem (11) to a voltage level of the first individual energy storage unit (31a) based on an information about a deviation from a nominal operating condition of the second drive unit (30b).

11. Propulsion system (10) according claim 10,
wherein the control unit (22) of the energy management subsystem (11) is configured to connect the energy storage unit (24) of the energy management subsystem (11) to the first individual energy channel (34a), such that energy is supplied by the energy storage unit (24) of the energy management subsystem (11) to the first individual thrust unit (33a) in parallel to energy supplied by the first individual energy storage unit (31a) to the first individual thrust unit (33a).

12. Propulsion system (10) according to any one of claims 10 or 11,
wherein the control unit (22) of the energy management subsystem (11) is configured to determine that the energy storage unit (24) of the energy management subsystem (11) is disconnected from the second individual energy channel (34b), such that only the first individual energy channel (34a) is connected to the energy storage unit (24) of the energy management subsystem (11) when energy is supplied by the energy storage unit (24) of the energy management subsystem (11) to the first individual thrust unit (33a).

13. Propulsion system (10) according to any one of claims 10 to 12,
wherein the information about the deviation from a nominal operating condition of the second drive unit (30b) comprises an information about a failure of the second drive unit (30b) or an information about a reduced performance of the second drive unit (30b).

14. Aircraft (100) comprising a propulsion system (10) according to any one of the preceding claims.

15. Method of selectively adapting an energy supply within a propulsion system (10) of an electrically driven aircraft (100), comprising the steps of:
Providing a plurality of drive units (30a, 30b, 30c) and an energy management subsystem (11, S1);
Receiving information about an operating condition of the plurality of drive units (30a, 30b, 30c, S2);
Selecting one drive unit of the plurality of drive units (30a, 30b, 30c) based on the information about the operating condition of the plurality of drive units (30a, 30b, 30c, S3);
Adapting, by the energy management subsystem (11), an output voltage of an energy storage unit (24) to a voltage level of the selected drive unit (S4);
Connecting the energy storage unit (24) to the selected drive unit, such that energy is supplied by the energy storage unit (24) to the selected drive unit or such that energy is withdrawn from the selected drive unit (S5).
